# EUROPÄISCHE PATENTSCHRIFT

(11) **EP 2 443 010 B1**
(45) Veröffentlichungstag und Bekanntmachung des Hinweises auf die Patenterteilung: **02.11.2016**
(21) Anmeldenummer: 10724521.9
(22) Anmeldetag: 18.06.2010
(51) Int. Cl.: B60T 13/74, B60W 10/22, B60T 7/10, F16D 65/14

(54) **KRAFTFAHRZEUGBREMSANLAGE MIT EINEM HYDRAULISCH BETÄTIGBAREN BETRIEBSBREMSSYSTEM UND EINEM ELEKTROMECHANISCH BETÄTIGBAREN BREMSSYSTEM**
MOTOR VEHICLE BRAKING SYSTEM HAVING A HYDRAULICALLY ACTUATED OPERATING BRAKING SYSTEM AND AN ELECTROMECHANICALLY ACTUATED BRAKING SYSTEM
SYSTÈME DE FREINAGE DE VÉHICULE À MOTEUR COMPORTANT UN SYSTÈME DE FREIN DE SERVICE À COMMANDE HYDRAULIQUE ET UN SYSTÈME DE FREIN À COMMANDE ÉLECTROMÉCANIQUE

(30) Priorität: 18.06.2009 DE 102009027035
(43) Veröffentlichungstag der Anmeldung: 25.04.2012
(73) Patentinhaber: Continental Teves AG & Co. oHG, 60488 Frankfurt (DE)
(72) Erfinder: SCHNEIDER, Heinz-Anton, 65527 Niedernhausen (DE); BALZ, Jürgen, 65510 Hünstetten-Oberlibbach (DE)
(86) Internationale Anmeldenummer: PCT/EP2010/058644
(87) Internationale Veröffentlichungsnummer: WO 2010/146158

(56) Entgegenhaltungen:
- WO-A1-2005/073043
- DE-A1- 10 345 485
- DE-A1- 10 349 970

## Beschreibung

Die vorliegende Erfindung betrifft ein Kraftfahrzeugbremssystem mit den Merkmalen vom Oberbegriff des Patentanspruch 1. Die Merkmalskombination ist als Bremssystem mit elektromechanisch ausgeführter Parkbremsfunktion grundsätzlich bekannt, siehe z.B. Dokument WO2005/073043.

Die Erfindung betrifft weiterhin ein zugehöriges Betriebsverfahren für das Kraftfahrzeugbremssystem.

Aus der EP 0 825 081 B1 ist ein Kraftfahrzeug mit Fahrstabilitätsfunktion ESP und einem hydraulischen Druckerzeuger in Gestalt einer Pumpe und mit einer elektromechanischen Stelleinheit für einen Aktuator bekannt, wobei eine Übergabe zwischen Betätigungseinrichtungen und Betätigungsarten auf Grundlage einer Mindestzuspannkraft definiert ist. Dadurch ist zwingend vorgegeben, dass die elektromechanische Stelleinheit unter allen

Betriebsbedingungen mindestens die Größe der hydraulisch durch die Pumpe eingesteuerten Zuspannkraft erzeugen kann, damit die zitierte Übergabebedingung erfüllt werden kann. Eine hydraulische Fahrzeugbremse mit elektrisch betätigbarer Feststellbremsvorrichtung ist weiterhin aus der DE 101 50 803 B4 bekannt. Demnach wird vorgeschlagen, dass von dem Elektromotor - zur Optimierung der Belastung der Komponenten der Fahrzeugbremse - eine im Vergleich zu einer maximalen Zuspannkraft reduzierte Zuspannkraft bereitgestellt wird, wenn Sensorinformationen eine Betätigung eines Betriebsbremspedals anzeigen. Mit anderen Worten wird der elektromotorisch zu erzeugende Zuspannkraftanteil um eine Größe reduziert, welche hydraulisch vom Fahrzeugführer eingesteuert worden ist. Diese Vorgehensweise ermöglicht während einer Zuspannphase eine Entlastung des Elektromotors durch Reduktion des elektrischen Strombedarfs. Im Ergebnis resultiert daraus ein zustandabhängig aufgespaltener Kraftfluss der Reaktionskräfte. Denn während der Zuspannbetätigungsphase - unter Ausnutzung der hydraulischen Unterstützung - liegt in dem elektromechanischen Antriebsstrang eine reduzierte Reaktionskraft vor. Der hydraulische Reaktionskraftanteil wird nach hydraulischem Druckabbau (Fahrer beendet die Pedalbetätigung) schlagartig zusätzlich dem Kraftfluss des Antriebsstrangs des Parkbremssystems aufgeprägt.

Bekannte Systeme, Vorrichtungen und Verfahren verfügen in Verbindung mit sogenannten integrierten Bremssätteln über den Nachteil, dass ein elektromechanischer Antriebs- und Getriebestrang vom Aktuator sowie vor allem das Bremssattelgehäuse und die Bremssattelbrücke prinzipiell mechanisch überdimensioniert, also erheblich leistungsfähiger als zwingend nötig, auszulegen ist, damit Wechselbeanspruchungen im Übergabeprozess sicher ertragen werden können.

Demgegenüber liegt der Erfindung die Aufgabe zu Grunde, eine Kraftfahrzeugbremsanlage und ein Betriebsverfahren bereitzustellen, das die Nachteile vom Stand der Technik eliminiert, und es bei grundsätzlich gleicher Ausfallsicherheit ermöglicht, sämtliche Bauteile eines Kraftfahrzeuges ohne übermäßige Dimensionierung dauerfest auszubilden, und dadurch dazu beiträgt, Bauteilgewicht und Herstellkosten zu senken.

Im Prinzip basieren die Lösungsmerkmale der Erfindung auf einem hydraulischen Druckkonditionierungsprozess im Sinne einer elektronisch gesteuerten oder geregelten hydraulischen Druckherabsetzung oder zumindest einer Drucklimitierung, bevor der elektromechanische Aktuator Zuspannkraft liefert, oder überhaupt elektrisch in Betrieb genommen wird. Dabei wird die Druckherabsetzung oder Drucklimitierung bevorzugt zustandsabhängig, das heißt in Abhängigkeit von bestimmten, insbesondere sicherheitsrelevanten Randbedingungen, wie insbesondere dem Fahrzeugstillstand vorgenommen. Eine Ausdehnung auf weitere Kriterien ist denkbar. Eine Schwelle oder Grenze für einen elektrischen Strombedarf des Aktuators wird nicht variiert, sondern bleibt konstant.

In weiterer Ausgestaltung der Erfindung wird vorgeschlagen, den eingesteuerten hydraulischen Druck in den integrierten Bremssätteln bei erfasstem Fahrzeugstillstand auf eine bestimmte vorgegebene Größe zu reduzieren, sofern der hydraulische Druckaufbau aus einer Bremsbetätigung während der Fahrt des Kraftfahrzeuges resultiert, oder es wird schlicht eine Begrenzung des hydraulischen Druckes auf eine bestimmte, definierte Größe vorgenommen, wenn beispielsweise erkannt wurde, dass der hydraulische Druck eingesteuert wurde, um das Fahrzeug in den Stillstand zu versetzen, und durch Übergabe an das elektromechanische Bremssystem in dem Stillstand zu halten.

Es versteht sich, dass Mittel und Maßnahmen für eine Plausibilisierung einer Druckkonditionierung vorgesehen sind, in deren Zusammenhang beispielsweise im voraus bestimmt wird, ob ein planmäßiger Druckkonditionierungsprozess ohne Schaden für Mensch und Fahrzeug durchgeführt werden kann oder nicht. Dies ist insbesondere unter Auswertung und Abgleich von elektrischen Geber-, Schalter- oder Sensorinformationen (Drucksensor, Neigungswinkelsensor, Raddrehzahl- oder Beschleunigungssensoren, Gas- und Bremsbetätigungssensoren, Fahrzeugsensoren, Bilderfassungsgeräte, (insbesondere Sensoren für Kupplungsweg-, Steigung-, Gierwinkel-, Beschleunigung-, Abstand-, Radar-, Lidar-, Ultraschall-, Raddreh- o.ä.) ermöglicht. Dabei wird vorab mit Hilfe eines übergeordneten Abgleichs von mehreren Geberinformationen (ggf. vom Chassis Controller), überprüft, ob ein planmäßiger Druckkonditionierungsprozess zu einem - als unerwünscht gewerteten - Wegrollvorgang des Fahrzeugs führen würde. Alternativ kann vorgesehen sein, dass der Druckkonditionierungsprozess eine variable Schwelle aufweist, und dass der Druckkonditionierungsprozess bis zu einem Punkt durchgeführt wird, der durch eine sensorisch erfasste oder ermittelte Zustandsänderung indiziert ist.

Durch die beschriebene Maßnahme wird eine grundsätzliche Betriebsbremsfunktion eines integrierten Bremssattels in keiner Weise beeinträchtigt. Vielmehr wird die Kenntnis ausgenutzt, dass bei Fahrzeugstillstand an gemessenen oder als gegeben angenommener Hangneigung (Steigung oder Gefälle) je nach Bedarf deutlich geringere hydraulische Drücke im Bremssystem bzw. in den integrierten Bremssätteln zum definierten Halten eines Fahrzeuges ausreichen, als durch einen Fahrzeugführer durch völlig unreflektiertes Betätigen eines Bremspedals / Betätigung der Betriebsbremsfunktion erzeugbar ist, so dass eine derart unreflektiert vorgenommene, übermäßige, Bremsbetätigung elektronisch geregelt also abgeändert und derart konditioniert umgesetzt wird, dass die Systemkomponenten bei voller Systemverfügbarkeit und vollem Funktionsumfang vor unnötiger Überbelastung geschont werden.

Die Erfindung ermöglicht es, die Dauerfestigkeit der Komponenten des elektromechanisch betätigbaren Bremssystems zu erhöhen, indem bestimmte, Betätigungsfälle eines Lastkollektives, die ein erhöhtes Schädigungspotential aufweisen, prädiktiv ausgeschlossen werden. Dies kann durch intelligente Ansteuerung von Komponenten einer HECU in Verbindung mit einer Druckbegrenzung oder Druckminderung erfolgen. Damit dient und ermöglicht die Erfindung insbesondere eine stark verbesserte, vernetzte Ansteuerung zwischen einem elektromechanisch betätigbaren Parkbremssystem und einem ohnehin vorhandenen ESP-Betriebsbremssystem, indem die gemeinsamen Resourcen, Energiequellen und Aktuatoren in Hinblick auf das gewünschte Spannkraftergebnis aufeinander abgestimmt, geregelt und nur so stark wie zwingend nötig, betätigt werden.

Die genannte Druckbegrenzung bzw. Druckreduzierung wird also durch Kooperation von Komponenten des Feststellbremssystems und des Betriebsbremssystems im Sinne einer aufeinander abgestimmten Regelung durchgeführt. Dabei kann die Notwendigkeit einer Konditionierung im Sinne einer Druckbeeinflussung oder Druckbegrenzung bei Fahrzeugstillstand mit Hilfe einer ohnehin vorhandenen Drucksensorinformation unter Vergleich mit einem vorgebbaren Druckschwellenwert (Vordruck-Maximalwert)- beispielhaft 40 bar - abgeschätzt werden. Bei positivem Ergebnis kann eine Druckbegrenzung insbesondere dadurch vorgenommen werden, dass bei Vorliegen der beschriebenen Randbedingungen (Stillstand, Überschreiten der Druckschwelle) Einlassventile (EV) zwischen elektrohydraulischer Energiequelle (ESP-Hydraulikaggregat / Motor-Pumpen-Aggregat, fremdbetätigbarer Bremskraftverstärker oder Hauptzylinder) und den jeweiligen integrierten Bremssätteln geschlossen werden. Eine Druckreduzierung kann dadurch umgesetzt werden, dass ein zu hoher hydraulischer Druck in den integrierten Bremssätteln durch Schließen der Einlassventile (EV) zwischen ESC-Aggregat und den integrierten Bremssätteln und/oder Öffnen von Auslassventile (AV) zwischen integrierten Bremssätteln und dem ESC-Aggregat erfolgt, wobei der überzählige Druck durch Volumenverschiebung in einen Niederdruckspeicher (NDS) vom ESC abgebaut wird.

Bei diagonaler Bremskreisaufteilung (X-Split) ist es zusätzlich zu der beschriebenen Verfahrensweise je Bremskreis grundsätzlich möglich wenigstens ein Trennventil (TV) zwischen einem hydraulischen Druckgeber (Hauptzylinder) und der HECU einzufügen oder ein vorhandenes Trennventil zu nutzen, wobei die Hydraulikpumpe der HECU gestartet wird, und ein in den Niederdruckspeichern (NDS) befindliches Flüssigkeitsvolumen zwecks Druckaufbau in Bremssättel ohne Feststellfunktion gepumpt wird.

Weitere Einzelheiten der Erfindung gehen nachstehend anhand der Beschreibung der Zeichnung hervor. In der Zeichnung zeigt jeweils vereinfacht am Beispiel einer sogenannten schwarz/weiß-Bremskreisaufteilung:
Fig. 1: Prinzipskizze zum Aufbau eines elektromechanischen Bremssystems als Bestandteil einer teilweise gezeigten Fahrzeugbremsanlage FBA enthaltend eine gemeinsame elektronische Steuereinheit (IPB),
Fig. 2: Prinzipskizze zum Aufbau eines elektromechanisch betätigbaren Bremssystems als Bestandteil einer teilweise gezeigten Fahrzeugbremsanlage FBA mit einer gesonderten (stand-alone) Steuereinheit (EPB-ECU),
Fig. 3: Schaltplan eines fremdbetätigbaren hydraulischen Fahrzeugbremssystem einschließlich ESP-Funktion mit integrierten, kombiniert betätigbaren Bremssätteln im Bereich einer Hinterachse,
Fig. 4: ein elektromechanisch und hydraulisch kombiniert betätigbarer, integrierter, Bremssattel im Schnitt, und
Fig. 5: ein Diagramm zur exemplarischen Verdeutlichung vom Verlauf mehrerer physikalischer Größen bei einem elektronisch geregelten Druckkonditionierungsprozess, jeweils abgetragen über der Zeit t.

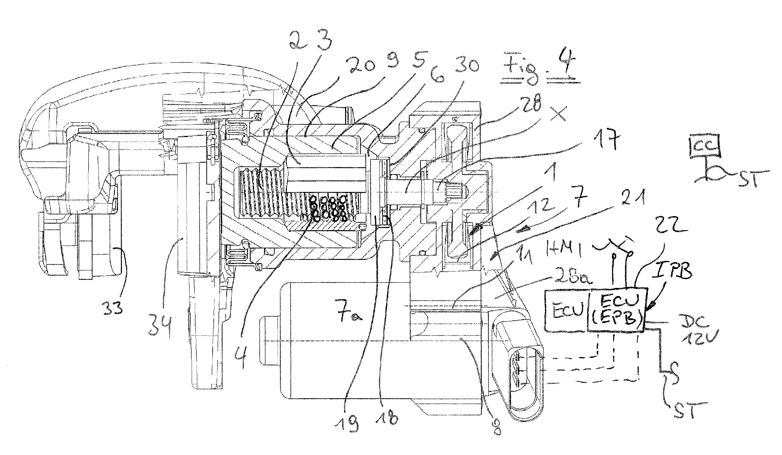

Eine Fahrzeugbremse weist einerseits eine hydraulisch betätigbare Betriebsbremsfunktion und andererseits eine elektromechanisch betätigbare Bremsfunktion auf, die vorrangig als Feststellbremsfunktion ausgelegt ist. Die Fahrzeugbremse ist gemäß Fig. 4 als Schwimmsattel-Scheibenbremse ausgeführt. Zur Ausführung einer elektromechanischen Bremsfunktion dient ein elektromechanischer Aktuator 7 einschließlich Elektromotor 7a. Dazu gehört ein mehrstufiges, insbesondere zweistufiges Getriebe 1, Sensoren S1-Sx sowie eine elektronische Steuereinheit 22 (ECU(EPB)). Die oben erwähnte Fahrzeugbremse weist weiterhin ein Bremsgehäuse bzw. einen Bremssattel 20, 20' auf, welcher den äußeren Rand einer nicht dargestellten Bremsscheibe und zwei auf beiden Seiten der Bremsscheibe angeordnete Bremsbeläge 33, 34 umgreift. Das Bremssattel 20 bildet auf seiner Innenseite einen Bremszylinder 9, der einen Bremskolben 5 axial verschiebbar aufnimmt. In den zwischen Bremszylinder 9 und Bremskolben 5 gebildeten Betriebsdruckraum 6 kann zur Durchführung von Betriebsbremsungen Bremsflüssigkeit zugeführt werden, so dass sich ein Bremsdruck aufbaut, der den Bremskolben 5 axial entlang einer Achse X zur Bremsscheibe hin verschiebt. Dadurch wird der dem Bremskolben 5 zugewandte Bremsbelag 34 gegen die Bremsscheibe gedrückt. Als Reaktion kann sich der Bremssattel 20 in entgegen gesetzter Richtung verschieben, so dass auch der andere Bremsbelag 33 gegen die Bremsscheibe gedrückt wird.

Im Rahmen einer automatisch oder fahrerinitiierten elektromechanischen Bremsbetätigung wird der Elektromotor 7a bestromt, und die rotatorische Antriebsdrehbewegung wird mit Hilfe vom Getriebe 1 in eine Translationsbewegung vom Kolben 5 entlang der Achse X umgewandelt. Das Getriebe 1 kann neben den besagten zwei Getriebestufen zur Wandlung eine Spindel 2 und eine Gewindemutter 3 aufweisen, die über Wälzkörper 4 miteinander in Verbindung stehen. Die Wälzkörper 4 sind als Kugeln ausgebildet. Ein mit der Spindel 2 verbundener Schaft 17 ragt an der der Bremsscheibe abgewandten Seite aus dem Bremssattel 20 heraus und wird unter Zwischenschaltung vom Getriebe 1 angetrieben. Dabei sind Mittel zum Abdichten des Betriebsdruckraums 6 in der Bohrung des Bremssattels 20, durch die der Schaft 17 ragt, vorgesehen. Die auf die Spindel 2 übertragene Rotationsbewegung wird über die Wälzkörper 4, die sich im Gewindegang zwischen Spindel 2 und Gewindemutter 3 befinden, auf die Gewindemutter 3 übertragen, die eine Translationsbewegung in Richtung der Achse X vollzieht. Dadurch wird der Bremskolben 5 betätigt, an dem sich die Gewindemutter 3 abstützt. Gleichzeitig wird die Spindel 2 von einer Stufenbohrung 30 im Bremssattel 20 aufgenommen und stützt sich über einen, mit der Spindel 2 verbundenen, Kragen 19 und ein Axiallager 18 am Bremssattel 20 ab. Das Getriebe 1 setzt also die Drehbewegung des elektromechanischen Aktuators 7 in eine Linearbewegung um und ist für die Generierung der Zuspannkraft zur Durchführung eines elektromechanisch ausgeführten (Feststell-)Bremsvorganges verantwortlich.

Zum Lösen der elektromechanischen Bremsvorrichtung wird der Aktuator 7 reversiert betrieben und die Gewindemutter 3 und damit auch der Bremskolben 5 vollziehen eine Bewegung in der Fig. 4 nach rechts. Die Bremsbeläge 33, 34 stehen dadurch nicht mehr mit der Bremsscheibe in Kontakt und der Lösezustand der Feststellbremsvorrichtung ist hergestellt.

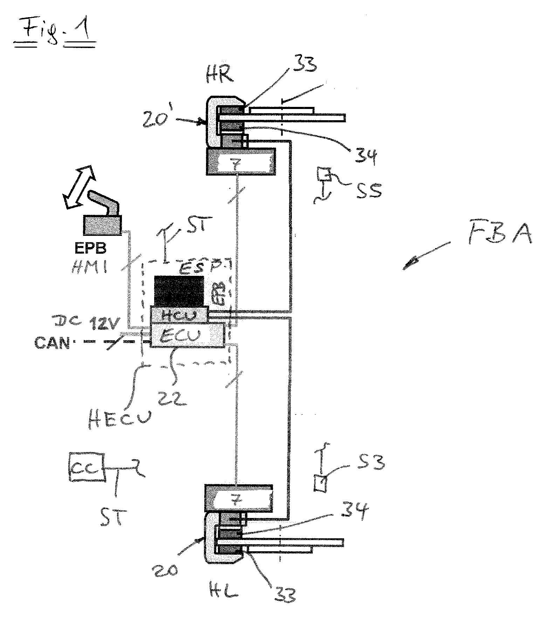

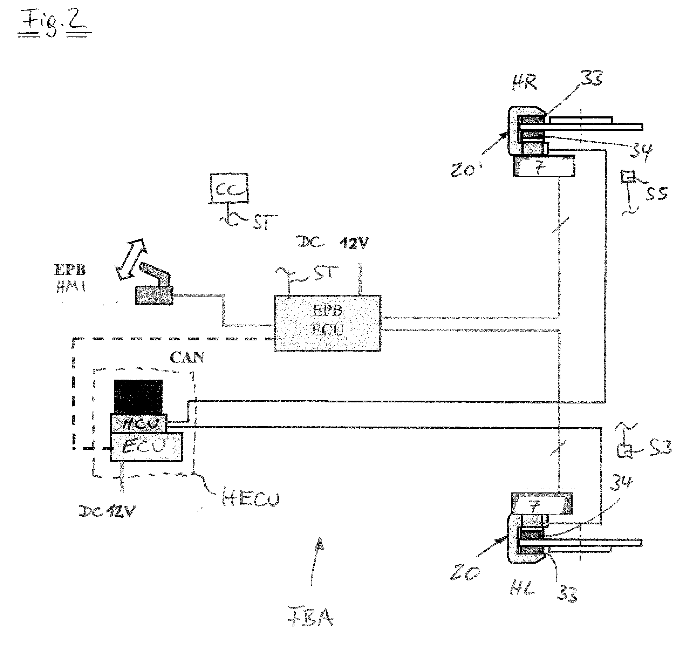

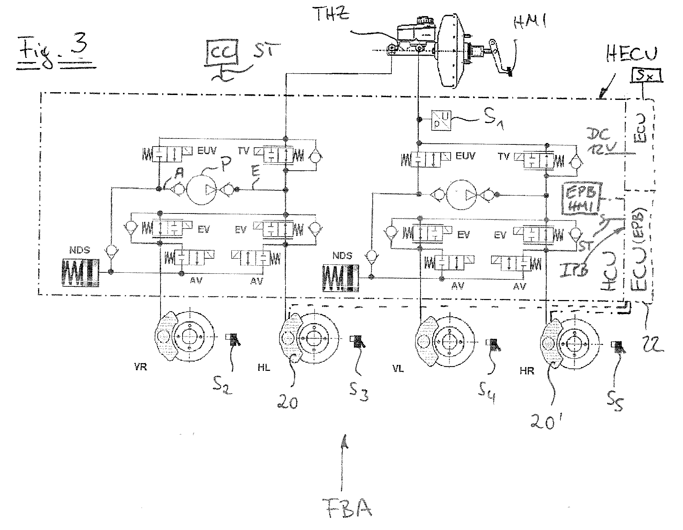

Die Figuren 1-3 verdeutlichen Gestaltungsformen einer mehrkreisigen elektronisch geregelten, fremdansteuerbaren, Kraftfahrzeugbremsanlage FBA mit ESP-Funktion, wobei das Betriebsbremssystem grundsätzlich eine diagonale Bremskreisaufteilung aufweist, und wobei die elektromechanische Bremsbetätigung einen Bremskreis betrifft, der durch die Bremssättel 20,20' der Radbremsen HR, HL einer Hinterachse gebildet ist. Eine Hydraulikeinheit HCU umfasst ein Motor-Pumpen-Aggregat mit einer Pumpe P, umfassend einen Druckmitteleingang E und einen Druckmittelausgang A, wobei im Anschluss an den Druckmittelausgang A üblicherweise eine Dämpfungsvorrichtung enthaltend mehrere, in Kaskade geschaltete, Dämpfungsmittel unter Beteiligung von wenigstens einer Dämpfungskammer vorgesehen ist. Der Druckmittelausgang A ist, wie schematisch verdeutlicht, je nach erforderlicher Funktion ventilgesteuert mit einem Hauptzylinder (THZ) oder mit Radbremsen VR, HL, VL, HR verbindbar. Zur Druckregelung oder Umschaltung in Saug- und Druckpfad der Pumpe P sind elektromagnetische Einlassventile EV, Auslassventile AV, Umschaltventile EUV und Trennventile TV in der HCU vorgesehen. Pumpe P, Dämpfungsmittel und Ventile EV, AV, EUV, TV sind prinzipiell zusammen mit der Pumpe P in einem gemeinsamen Aufnahmekörper der gebildeten HCU angeordnet. Zur elektronischen Ansteuerung und Versorgung von Ventilen V und Pumpe P ist ein elektronisches Steuergerät ECU vorgesehen, die gleichzeitig zur elektrischen Ansteuerung der integrierten Bremssättel HL, HR vorgesehen ist, und zu diesem Zweck direkt elektrisch mit den Bremssätteln 20,20' anhand von 2- oder Mehrdrahtleitern verbunden ist. Insgesamt ist dadurch eine, in einem einzigen Gehäuse angeordnete, integrierte, Steuereinheit (IPB) für Betriebs- und Feststellfunktion arrangiert.

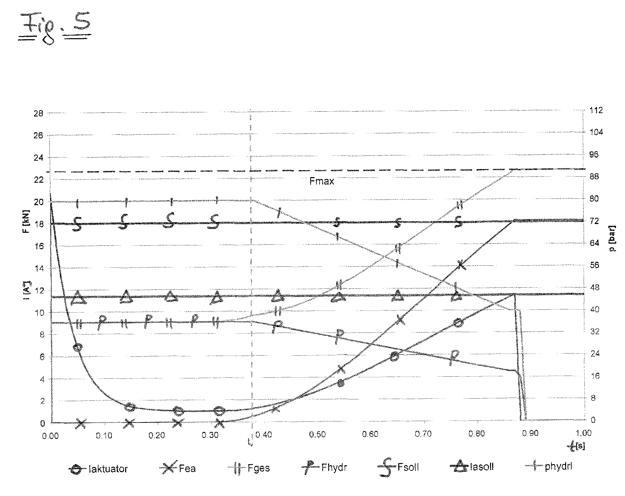

Nachdem oben im Wesentlichen die Komponenten eines Fahrzeugsbremssystems mit hydraulischen Betriebsbremskomponenten und elektromechanischen Bremskomponenten sowie integrierten Bremssätteln 20,20' erläutert ist, erfolgt nachstehend eine Funktionsbeschreibung eines Betriebsverfahrens mit einem elektronisch gesteuert oder geregelt vorgenommenen hydraulischen Konditionierungsprozess anhand der Fig. 5.

Zunächst kann eine bevorstehende hydraulische oder elektromechanische Bremsbetätigung durch Plausibilisierung anhand mehrerer unterschiedlicher Informationen, wie insbesondere anhand von einem Abgleich von Sensorinformationen zur Bewertung von einem aktuellen oder bevorstehenden Fahrzeugfahrzustand, vorherbestimmt werden. Dadurch ist es möglich, eine bevorstehende Bremsbetätigung in einem Vorfeld zu ermitteln. Dies kann beispielsweise im Rahmen von bildgestützten, automatisierten Fahrzeugregelsystemen zur Unfallvermeidung, oder durch sonstige elektronische Fahrerassistenzsysteme (beispielsweise ADAS, Global Chassis Control o.a.) erfolgen. Zusammenfassend wird auf Grundlage der vorliegenden Informationen eine Entscheidung getroffen, ob eine elektronisch geregelte hydraulische Druckkonditionierung prinzipiell nötig ist, oder nicht.

Es versteht sich in diesem Zusammenhang auch, dass weiterhin gesonderte Mittel oder Maßnahmen zur Plausibilisierung einer Entscheidung vorgesehen sind, in deren Zusammenhang im voraus bestimmt wird, ob ein geplanter Druckkonditionierungsprozess überhaupt ohne Schaden für Mensch oder Fahrzeug durchgeführt werden kann oder nicht. Dies ist insbesondere unter Auswertung und Abgleich von Sensorinformationen (Neigungswinkelsensor, Raddrehsensor, (Dreh-)Beschleunigungssensor o.ä.) möglich, indem vorab mit Hilfe von den Sensorinformationen überprüft wird, ob ein planmäßiger Druckkonditionierungsprozess zu einem unerwünschten, unkomfortablen oder gefährlichen Fahrzeugverhalten (beispielsweise Rückrollvorgang am Hang) führen würde. Alternativ kann vorgesehen sein, dass der elektronisch geregelte Druckkonditionierungsprozess eine variable Schwelle derart aufweist, dass der Druckkonditionierungsprozess bis zu einem Punkt durchgeführt wird, die durch eine sensorisch erfasste Zustandsänderung (beispielsweise der sensorisch erfasste Beginn des Abrollvorgangs am Hang oder eine bestimmte Abrollgeschwindigkeit) indiziert ist.

Im Anschluss an die Erkennung und Verifikation kann es in Abhängigkeit von dem gewünschten Ergebnis und Fahrzeugverhalten vorgesehen sein, dass der elektronisch geregelte, hydraulische Druckkonditionierungsprozess zeitlich erst nach Bestromung vom Aktuator 7 oder gewissermaßen vorausschauend (prädiktiv) vorgenommen wird. Es ist Wesentlich, dass der Druckkonditionierungsprozess gestartet wird, bevor der Aktuator 7 in Wesentlichem Umfang einen Zuspannkraftanteil Fea beiträgt. Beispielsweise erfolgt ein Zeitpunkt tv zur Initiierung von dem Druckkonditionierungsprozess in einem Zeitfenster bis etwa 0,4s nach dem Starten einer Betätigung des elektromechanischen Aktuators 7 (Zeitpunkt t=0).

Der elektronisch geregelte, hydraulische DruckKonditionierungsprozess kann im Sinne einer elektronisch geregelten, hydraulischen Druckminderung oder im Sinne einer elektronisch geregelten, hydraulischen Druckbegrenzung vorgenommen werden Dabei wird die hydraulische DruckKonditionierung (Druckminderung oder Druckbegrenzung) in Abhängigkeit von sensierten oder gemessenen konkreten Fahrzeugfahr- oder Fahrzeugbetriebs-, beziehungsweise Bedienungs- wie insbesondere Bremsbetätigungszuständen, zustandsabhängig, vorgenommen. Der elektronisch geregelte, hydraulische Druckkonditionierungsprozess kann insbesondere vorgenommen werden, wenn der Fahrzeugstillstand nach dem fahrerinitiierten Abbremsen im Sinne eines Fahrzeugfeststellvorgangs hergestellt oder abgesichert werden soll. Dabei ist eine Schwelle für eine maximale Stromaufnahme I_{Aktuator} des Aktuators 7 fest vorgegeben definiert und wird insbesondere nicht abgeändert oder variiert.

In weiterer Ausgestaltung der Erfindung wird es auch vorgeschlagen, den hydraulischen Druck p_{Hydr} in den integrierten (kombinierten) Bremssätteln 20,20' bei Fahrzeugstillstand auf ein bestimmtes Maß zu reduzieren, sofern der hydraulische Druckaufbau aus einer automatisierten Abbremsung, beispielsweise bis zum Stillstand des Kraftfahrzeuges, resultiert. Sofern der Abgleich der ermittelten oder gemessenen Signal- und Informationsmuster eine spätere Betätigung der Feststellbremsvorrichtung gewissermaßen vorausschauend sicher erkennen lässt, kann alternativ bereits während der Bremsbetätigung eine schlichte Begrenzung oder Regulierung des eingesteuerten hydraulischen Druckes auf ein bestimmtes Maß vorgenommen werden. Mit anderen Worten kann eine gewisse Abblendwirkung vorgesehen sein. Dies ist aus Fig. 5 ersichtlich, indem keine schlagartige Absenkung sondern eine lineare Verringerung von dem hydraulischen Druck p_{hydr} ab dem Zeitpunkt tv vorgesehen ist.

Die genannte Druckbegrenzung bzw. Druckreduzierung kann durch Kooperation vom vorzugsweise integrierten EPB-System und ESP-System, sowie erforderlichenfalls durch Interaktion mit anderen Kraftfahrzeug-Assistenzsystemen gewissermaßen koordiniert vorgenommen werden. Zu diesen System sind inbesondere zu zählen: Komfortassistenzfunktionen, wie Kraftfahrzeugabstandsregelungssysteme, Antriebsstrang- und Getrieberegelungssysteme, Systeme zur regenerativen oder rekuperativen Abbremsung, Unfallvermeidungssysteme oder andere Kraftfahrzeugregelsysteme. Durch die Vernetzung ist es ermöglicht, eine übergeordnete, aufeinander abgestimmte elektronische Systemregelung durchzuführen, um Lastspitzen im Bereich der Feststellbremsvorrichtung zu reduzieren. Grundsätzlich kann die Notwendigkeit einer Druckmodifikation, Druckbeeinflussung oder Druckbegrenzung mit Hilfe eines Drucksensors S1 durch Vergleich mit einem vorgebbaren Druckschwellenwert (Vordruck-Maximalwert) bei ermitteltem Fahrzeugstillstand - beispielhaft sind dies 40 bar - vorgesehen werden.

In weiterer Ausgestaltung der Erfindung ist ein Einsatz und eine Verwendung der Signale von Drucksensoren denkbar, die den hydraulischen Druck in den Druckräumen 6 der integrierten Bremssättel 20,20' messen.

Eine Druckbegrenzung kann insbesondere dadurch vorgenommen werden, dass bei Vorliegen der beschriebenen Randbedingungen (Stillstand, Überschreiten der Druckschwelle) Einlassventile EV zwischen elektrohydraulischer Energiequelle (ESP-Hydraulikaggregat / Motor-Pumpen-Aggregat, fremdbetätigbarer Bremskraftverstärker oder Hauptzylinder) und den jeweiligen integrierten Bremssätteln geschlossen werden.

Eine Druckreduzierung kann dadurch umgesetzt werden, dass ein zu hoher hydraulischer Druck in den integrierten Bremssätteln durch Schließen der Einlassventile EV der HECU und/oder Öffnen von Auslassventile AV der HECU erfolgt, wobei der hydraulische Druck durch Volumenverschiebung in einen Niederdruckspeicher NDS der HECU reduziert wird.

Bei diagonaler Bremskreisaufteilung (X-Split) wird zusätzlich zu der beschriebenen Verfahrensweise je Bremskreis wenigstens ein Trennventil TV zwischen einem hydraulischen Druckgeber (Hauptzylinder THZ) und dem ESP-Aggregat geschlossen, wobei die Hydraulikpumpe des ESP-Aggregates gestartet wird, und ein in den Niederdruckspeichern NDS befindliches Flüssigkeitsvolumen zwecks Druckaufbau in die nichtintegrierten Bremssättel (in bevorzugter Ausführung die an einer Vorderachse VA angeordneten Bremssättel) gepumpt wird und dort zu einer Druckerhöhung genutzt werden kann.

Obwohl die Erfindung primär bei einer manuell angeforderten elektromechanisch ausgeführten Feststellbremsbetätigung erläutert worden ist, sind vielfache Ausführungsformen und Anwendungen denkbar, die mit teil- oder vollautomatisierten Fahrerassistenzfunktionen in Verbindung stehen können. Es versteht sich, dass zu diesem Zweck eine entsprechende Vernetzung der Steuereinheit ECU mit anderen Sensoren S1-Sx und/oder anderen elektronischen Steuergeräten eines Kraftfahrzeugs, im Rahmen von einem vernetzten, drahtgebundenen oder drahtlosen Datenübertragungssystems (CAN, LIN, FLEXRAY, Byteflight etc.) vorgesehen ist. Es versteht sich weiterhin, dass die elektronische Steuereinheit ECU wenigstens eine offene Schnittstelle ST aufweist, die dazu eingerichtet ist, dass ein Druckkonditionierungsprozess auf Anforderung von extern, also auf Anforderung von einem fahrzeugintegrierten Steuergerät oder auf Anforderung von einem außerhalb vom Fahrzeug angeordneten Steuergerät (external request) ausgeführt wird. Diese Schnittstelle ST kann, genauso wie eine Vernetzung von verschiedenssten elektronischen Steuergeräten im Übrigen, drahtgebunden oder drahtlos vorgesehen sein.

Die Erfindung eignet sich insbesondere für eine Verbindung mit einem übergeordneten, elektronischen Chassis-Controller CC, dem eine übergeordnete Koordinierung sowie Steuerung und Regelung von übergeordneten Aufgaben in einem automatisierten, elektronischen Kraftfahrzeugregelungsverbund zukommt, so dass durch diese übergeordnete elektronische Vernetzung und Interaktion beispielsweise zwischen einander widersprechenden Regelungseingriffen von unterschiedlichen elektronischen Steuereinheiten eines Kraftfahrzeugs vermittelt werden kann. In einer derartigen Kraftfahrzeugkonfiguration ist es insbesondere denkbar, dass dem Chassis Controller in der Ansteuerung gewissermaßen eine Master-Funktion zukommt, die die Steuerung und Regelung der Feststellbremsfunktion beeinflusst. Auch der umgekehrte Fall ist denkbar, dass der Chassis-Controller gewissermaßen einen Auftrag zur Ausführung einer Druckkonditionierung an ein elektronisches Steuergerät ausgibt, wobei der Auftrag beispielsweise aus Sicherheitsgründen von dem betreffenden elektronischen Steuergerät (ECU,IPB, EPB-ECU) verworfen werden kann.

### Bezugszeichenliste

- 1: Getriebe
- 2: Spindel
- 3: Gewindemutter
- 4: Wälzkörper
- 5: Bremskolben
- 6: hydraulischer Betriebsdruckraum
- 7: elektromechanischer Aktuator
- 7a: Elektromotor
- 8: Motorwelle
- 9: Bremszylinder
- 11: Getriebestufe
- 12: Getriebestufe
- 17: Schaft
- 18: Axiallager
- 19: Kragen
- 20: Bremssattel
- 21: Antriebsmodul
- 22: Steuereinheit
- 28: Gehäuse
- 28a: Gehäusedeckel
- 30: Stufenbohrung
- 33: Bremsbelag
- 34: Bremsbelag

- A: Auslaß
- CC: elektronischer Chassis Controller
- E: Einlaß
- ECU: Elektronisches Steuergerät
- EV,AV,TV,EUV: Ventil
- ESP: Fahrstabilitätsfunktion
- FBA: Kraftfahrzeugbremsanlage
- HMI: Mensch-Maschine-Schnittstelle
- HCU: Hydraulikeinheit
- IPB: gemeinsame Steuereinheit
- NDS: Niederdruckspeicher
- P: Pumpe
- S1,2,3...x: Sensor (Druck-, Rad-, etc.)
- ST: Schnittstelle
- THZ: Tandemhauptzylinder
- VR: Radbremse vorne rechts
- VL: Radbremse vorne links
- HR: Radbremse hinten rechts
- HL: Radbremse hinten links
- X: Achse

- I_{Aktuator}: gemessener/ermittelter Aktuatorstrom
- Iₐₛₒₗₗ: vorgegebener Aktuatorstrom (Stromvorgabe)
- Fₑₐ: Zuspannkraftanteil elektromechanisch
- Fₛₒₗₗ: Soll- Zuspannkraft (gesetzliche Vorgabe)
- F_{hydr}: Zuspannkraftanteil hydraulisch
- F_{ges}: (Summen-) Zuspannkraft
- P_{hydr}: hydraulischer Druck
- tᵥ: Schließzeitpunkt EV

## Patentansprüche

1. Kraftfahrzeugbremsanlage mit einem hydraulisch betätigbaren Betriebsbremssystem und mit einem elektromechanisch betätigbaren Bremssystem umfassend ein Bedienelement insbesondere zum Aktivieren einer Feststellbremsfunktion, eine elektronische Steuereinheit zum Aktivieren von einem Aktuator (7) des Bremssystems, und eine elektrohydraulische Steuereinheit, die grundsätzlich einer Betriebsbremse zugeordnet ist, und grundsätzlich zum Steuern oder Regeln von Betriebsbremsfunktionen, Fahrstabilitätsfunktionen, und/oder Bremsassistenzfunktionen dient, und mit Belastungsreduktion von Bauteilen oder Komponenten des elektromechanischen Bremssystems, wobei zeitlich nach einer automatischen oder fahrerinitiierten hydraulischen Bremsbetätigung, und zeitlich vor Vollendung einer anschließenden elektromechanischen Bremsbetätigung in wenigstens einem Betriebsdruckraum (6) eines elektromechanisch betätigbaren Bremssattels (20,20'), ein elektronisch geregelter, hydraulischer Druckkonditionierungsprozess durchgeführt wird, **dadurch gekennzeichnet, dass** der elektronisch geregelte, hydraulische Druckkonditionierungsprozess eine hydraulische Druckreduktionsfunktion aufweist.

2. Kraftfahrzeugbremsanlage nach Anspruch 1, **dadurch gekennzeichnet, dass** eine Bremsbetätigung durch Plausibilisierung anhand mehrerer unterschiedlicher Informationen, wie insbesondere anhand von einem Abgleich von mehreren Sensorinformationen zur Bewertung von einem aktuellen Fahrzeugfahrzustand, vorherbestimmt wird, und dass der elektronisch geregelte, hydraulische Druckkonditionierungsprozess zeitlich nach einer Bestromung vom Aktuator (7) erfolgt.

3. Kraftfahrzeugbremsanlage nach Anspruch 1, **dadurch gekennzeichnet, dass** der Aktuator (7) zeitlich nach dem elektronisch geregelten, hydraulischen Druckkonditionierungsprozess einen merklichen Zuspannkraftanteil (Fea) erzeugt.

4. Kraftfahrzeugbremsanlage nach Anspruch 1, **dadurch gekennzeichnet, dass** der Aktuator (7) während dem elektronisch geregelten, hydraulischen Druckkonditionierungsprozess aktuiert wird, und einen reduzierten Zuspannkraftanteil (Fea) erzeugt.

5. Kraftfahrzeugbremsanlage nach Anspruch 1, **dadurch gekennzeichnet, dass** der elektronisch geregelte, hydraulische Druckkonditionierungsprozess vorgegebene Parameter, wie insbesondere konstant vorgegebene hydraulische Druckschwellwerte, aufweist, die in der elektronischen Steuereinheit (EPB-ECU, IPB) abgelegt sind.

6. Kraftfahrzeugbremsanlage nach Anspruch 1, **dadurch gekennzeichnet, dass** der elektronisch geregelte, hydraulische Druckkonditionierungsprozess zustandabhängig angepasste hydraulische Druckschwellwerte aufweist.

7. Kraftfahrzeugbremsanlage nach Anspruch 1, **dadurch gekennzeichnet, dass** der elektronisch geregelte, hydraulische Druckkonditionierungsprozess zustandsabhängig, in Abhängigkeit von bremsrelevanten, Randbedingungen, Messwerten und/oder Parametern, wie insbesondere in Abhängigkeit von einem erkannten Fahrzeugstillstand, durchgeführt wird.

8. Kraftfahrzeugbremsanlage nach Anspruch 1, **dadurch gekennzeichnet, dass** vor Durchführung oder Beendigung vom elektronisch geregelten, hydraulischen Druckkonditionierungsprozess eine Plausibilisierung durchgeführt wird, um im Voraus auf Grundlage von gemessenen oder ermittelten Informationen zu bestimmen, ob der Druckkonditionierungsprozess gefahrlos durchgeführt werden kann oder nicht, und dass eine Entscheidung zur Durchführung von einem Druckkonditionierungsprozess nach einem negativen Ergebnis der Plausibilisierung verworfen, unterbrochen oder beendet wird.

9. Kraftfahrzeugbremsanlage nach Anspruch 1, **dadurch gekennzeichnet, dass** ein elektronisch geregelter, hydraulischer Druckkonditionierungsprozess wenigstens eine, von der elektronischen Steuereinheit (ECU) des Betriebsbremssystems gesteuerte oder geregelte, Betätigung eines Elektromagnetventils (AV,EV,EUV,TV) einer elektrohydraulischen Steuereinheit (HECU) aufweist.

10. Kraftfahrzeugbremsanlage nach einem oder mehreren der vorhergehenden Ansprüche, **dadurch gekennzeichnet, dass** die elektronische Steuereinheit des elektromechanisch betätigbaren Bremssystems (EPB-ECU) und die elektronische Steuereinheit (ECU) des Betriebsbremssystems als gemeinsame Steuereinheit (IPB) in einem gemeinsamen Gehäuse integriert vorgesehen sind.

11. Kraftfahrzeugbremsanlage nach Anspruch 10, **dadurch gekennzeichnet, dass** die gemeinsame Steuereinheit (IPB) eine Vernetzung mit anderen Sensoren (S1-Sx) und/oder elektronischen Steuergeräten (ECU)eines Kraftfahrzeugs, im Rahmen von einem vernetzten, drahtgebundenen oder drahtlosen Datenübertragungssystem (CAN, LIN, FLEXRAY, Byteflight etc.) aufweist.

12. Kraftfahrzeugbremsanlage nach Anspruch 10 oder 11, **dadurch gekennzeichnet, dass** die gemeinsame elektronische Steuereinheit (IPB) wenigstens eine offene Schnittstelle (ST) aufweist, die dazu eingerichtet ist, dass ein Druckkonditionierungsprozess auf Anforderung von einem anderen fahrzeugintegrierten elektronischen Steuergerät, oder auf Anforderung von einem außerhalb vom Fahrzeug angeordneten elektronischen Steuergerät, wie insbesondere durch Anforderung von einem übergeordneten elektronischen Chassis Controller (CC), ausgeführt wird.

13. Betriebsverfahren für eine Kraftfahrzeugbremsanlage mit den Merkmalen von Anspruch 1, **gekennzeichnet durch** einen oder mehrere Verfahrensschritte nach einem oder mehreren der Ansprüche 2 bis 9.

## Claims

1. Motor vehicle brake system having a hydraulically actuatable service brake system and an electromechanically actuatable brake system, comprising an operating element particularly for activating a parking brake function, an electronic control unit for activating an actuator (7) of the brake system, and an electrohydraulic control unit which in principle is associated with a service brake and in principle serves to control or regulate service brake functions, driving stability functions and/or braking assistance functions, and having reduction of stress on parts or components of the electromechanical brake system, wherein temporally following an automatic or driver-initiated hydraulic brake actuation, and temporally prior to completion of a following electromechanical brake actuation, an electronically controlled hydraulic pressure conditioning process is carried out in at least one operating pressure chamber (6) of an electromechanically actuatable brake caliper (20, 20'), **characterized in that** the electronically controlled hydraulic pressure conditioning process comprises a hydraulic pressure reducing function.

2. Motor vehicle brake system according to Claim 1, **characterized in that** a brake actuation is predetermined by plausibility checking with reference to a plurality of different pieces of information, such as in particular with reference to a balancing of a plurality of pieces of sensor information, in order to evaluate an actual vehicle driving state, and **in that** the electronically controlled hydraulic pressure conditioning process takes place temporally after energization of the actuator (7).

3. Motor vehicle brake system according to Claim 1, **characterized in that** the actuator (7) generates a perceptible application force component (Fea) temporally after the electronically controlled hydraulic pressure conditioning process.

4. Motor vehicle brake system according to Claim 1, **characterized in that** the actuator (7) is actuated, and generates a reduced application force component (Fea), during the electronically controlled hydraulic pressure conditioning process.

5. Motor vehicle brake system according to Claim 1, **characterized in that** the electronically controlled hydraulic pressure conditioning process has predetermined parameters such as, in particular, hydraulic pressure threshold values predetermined to be constant, which are stored in the electronic control unit (EPB-ECU,IPB).

6. Motor vehicle brake system according to Claim 1, **characterized in that** the electronically controlled hydraulic pressure conditioning process has state-dependently adapted hydraulic pressure threshold values.

7. Motor vehicle brake system according to Claim 1, **characterized in that** the electronically controlled hydraulic pressure conditioning process is carried out in a state-dependent manner, in dependence on brake-relevant marginal conditions, measurement values and/or parameters, such as in particular in dependence on a detected standstill of the vehicle.

8. Motor vehicle brake system according to Claim 1, **characterized in that** a plausibility check is carried out prior to execution or ending of the electronically controlled hydraulic pressure conditioning process in order to determine in advance, on the basis of measured or determined information, whether the pressure conditioning process can or cannot be carried out without danger, and **in that** a decision to carry out a pressure conditioning process is rejected, interrupted or ended after a negative result of the plausibility check.

9. Motor vehicle brake system according to Claim 1, **characterized in that** an electronically controlled hydraulic pressure conditioning process comprises at least one actuation of an electromagnetic valve (AV, EV, EUV, TV) of an electrohydraulic control unit (HECU), which actuation is controlled or regulated by the electronic control unit (ECU) of the service brake system.

10. Motor vehicle brake system according to one or more of the preceding claims, **characterized in that** the electronic control **unit of the** electromechanically actuatable brake system (EPB-ECU) and the electronic control unit (ECU) of the service brake system are provided to be integrated in a common housing as a common control unit (IPB).

11. Motor vehicle brake system according to Claim 10, **characterized in that** the common control unit (IPB) comprises a network with other sensors (S1-Sx) and/or electronic control devices (ECU) of a motor vehicle within a networked, wire-connected or wireless data transfer system (CAN, LIN, FLEXRAY, Byteflight, etc.).

12. Motor vehicle according to Claim 10 or 11, **characterized in that** the common electronic control unit (IPB) has at least one open interface (ST) which is set up in such a way that that a pressure conditioning process is executed upon request by another vehicle-integrated electronic control device, or upon request by an electronic control device arranged outside the vehicle, such as in particular upon request by a higher-level electronic chassis controller (CC).

13. Operating method for a motor vehicle brake system having the features of Claim 1, **characterized by** one or more process steps according to one or more of Claims 2 to 9.

## Revendications

1. Système de freinage pour véhicule automobile comportant un système de freinage de service pouvant être actionné hydrauliquement et comportant un système de freinage pouvant être actionné électromécaniquement, comprenant un élément de commande notamment destiné à activer une fonction de freinage de stationnement, une unité de commande électronique destinée à activer un actionneur (7) du système de freinage, et une unité de commande électrohydraulique, qui est en principe associée à un frein de service et est en principe utilisée pour commander ou réguler des fonctions de freinage de service, des fonctions de stabilité de conduite et/ou des fonctions d'assistance au freinage, et comportant une réduction de la charge de modules ou de composants du système de freinage électromécanique, dans lequel temporellement après un actionnement hydraulique des freins automatique ou déclenché par le conducteur, et temporellement avant l'achèvement d'un actionnement électromécanique suivant des freins dans au moins un chambre sous pression de service (6) d'un étrier de frein pouvant être actionné électromécaniquement (20, 20'), un processus de conditionnement de pression hydraulique régulé électroniquement est exécuté, **caractérisé en ce que** le processus de conditionnement de pression hydraulique régulé électroniquement comporte la fonction de réduction de la pression hydraulique.

2. Système de freinage pour véhicule automobile selon la revendication 1, **caractérisé en ce qu'**un actionnement des freins est déterminé à l'avance par un test de vraisemblance sur la base de plusieurs informations différentes, notamment, par exemple, sur la base d'un équilibrage de plusieurs informations de capteurs, pour évaluer un état de conduite actuel du véhicule, et **en ce que** le processus de conditionnement de pression hydraulique régulé électroniquement s'effectue temporellement après une alimentation en courant de l'actionneur (7).

3. Système de freinage pour véhicule automobile selon la revendication 1, **caractérisé en ce que** l'actionneur (7) génère une fraction notable de la force de serrage (Fea) temporellement après le processus de conditionnement de pression hydraulique régulé électroniquement.

4. Système de freinage pour véhicule automobile selon la revendication 1, **caractérisé en ce que** l'actionneur (7) est actionné pendant le processus de conditionnement de pression hydraulique régulé électroniquement, et génère une fraction réduite de la force de serrage (Fea).

5. Système de freinage pour véhicule automobile selon la revendication 1, **caractérisé en ce que** le processus de conditionnement de pression hydraulique régulé électroniquement comporte des paramètres prédéterminés, par exemple, notamment, des seuils de pression hydraulique constants prédéterminés, qui sont stockés dans l'unité de commande électronique (EPB-ECU, IPB).

6. Système de freinage pour véhicule automobile selon la revendication 1, **caractérisé en ce que** le processus de conditionnement de pression hydraulique régulé électroniquement comporte des seuils de pression hydraulique adaptés en fonction de l'état.

7. Système de freinage pour véhicule automobile selon la revendication 1, **caractérisé en ce que** le processus de conditionnement de pression hydraulique régulé électroniquement, est exécuté selon l'état, en fonction de conditions aux limites, de valeurs de mesure et/ou de paramètres liés au freinage, par exemple, notamment, en fonction d'un arrêt détecté du véhicule.

8. Système de freinage pour véhicule automobile selon la revendication 1, **caractérisé en ce que**, avant l'exécution ou l'arrêt du processus de conditionnement de pression hydraulique régulé électroniquement, un test de vraisemblance est exécuté afin de déterminer à l'avance, sur la base d'informations mesurées ou déterminées, si le processus de conditionnement de pression peut ou non être effectué sans danger, et **en ce qu'**une décision de mise en oeuvre d'un processus de conditionnement de pression est rejeté, interrompu ou terminé après un résultat négatif du test de vraisemblance.

9. Système de freinage pour véhicule automobile selon la revendication 1, **caractérisé en ce qu'**un processus de conditionnement de pression hydraulique régulé électroniquement comporte au moins un actionnement d'une électrovanne (AV, EV, EUV, TV) d'une unité de commande électrohydraulique (HECU), commandé ou régulé par l'unité de commande électronique (ECU) du système de freinage de service.

10. Système de freinage pour véhicule automobile selon une ou plusieurs des revendications précédentes, **caractérisé en ce que** l'unité de commande électronique du système de freinage pouvant être actionné électromécaniquement (EPB-ECU) et l'unité de commande électronique (ECU) du système de freinage de service sont prévues intégrées en tant qu'unité de commande commune (IPB) dans un boîtier commun.

11. Système de freinage pour véhicule automobile selon la revendication 10, **caractérisé en ce que** l'unité de commande commune (IPB) comporte une connexion en réseau avec d'autres capteurs (S1-Sx) et/ou appareils de commande électroniques (ECU) d'un véhicule automobile, dans le cadre d'un système de transmission de données connecté en réseau, câblé ou sans fil (CAN, LIN, FLEXRAY, Byteflight etc.).

12. Système de freinage pour véhicule automobile selon la revendication 10 ou 11, **caractérisé en ce que** l'unité de commande électronique commune (IPB) comporte au moins une interface ouverte (ST) qui est conçue de telle sorte qu'un processus de conditionnement de pression est exécuté sur demande d'un autre appareil de commande électronique intégré au véhicule, ou sur demande d'un appareil de commande électronique disposé à l'extérieur du véhicule, par exemple, notamment, sur demande d'un Contrôleur de Châssis (CC) électronique de niveau supérieur.

13. Procédé de mise en fonctionnement destiné à un système de freinage pour véhicule automobile présentant les caractéristiques de la revendication 1, **caractérisé par** une ou plusieurs étapes de procédé selon l'une ou plusieurs des revendications 2 à 9.
